# EUROPEAN PATENT SPECIFICATION

(11) **EP 2 703 200 B1**
(45) Date of publication and mention of the grant of the patent: **07.12.2016**
(21) Application number: 13180413.0
(22) Date of filing: 14.08.2013
(51) Int. Cl.: B60H 1/32, F25D 11/00

(54) **Refrigerated transport system and refrigeration logistics system**
KÜHLTRANSPORTSYSTEM UND KÜHLLOGISTIKSYSTEM
SYSTÈME DE TRANSPORT RÉFRIGÉRÉ ET SYSTEME LOGISTIQUE DE REFRIGERATION

(30) Priority: 31.08.2012 IT PD20120254
(43) Date of publication of application: 05.03.2014
(73) Proprietor: Caddeo Perelli, Jean Gilbert, 14100 Asti (IT)
(72) Inventor: Caddeo Perelli, Jean Gilbert, 14100 Asti (IT)
(74) Representative: Cantaluppi, Stefano

(56) References cited:
- WO-A1-88/10222
- US-A1- 2004 226 309

## Description

The present invention relates to a refrigerated transport system of the type including the features set out in the preamble of the main claim; it further relates to a refrigeration logistics system which makes use of such a transport system.

In order to facilitate the control and transport of products which need to be conserved at a controlled temperature, use is nowadays widely made of refrigerated insulated cells mounted on transport vehicles. An example of such technology is described in EP2072299. That document describes systems of refrigerated transport including cells which are refrigerated and insulated by a refrigeration module which can be actuated directly by the engine which is intended for the propulsion of the vehicle or by an auxiliary motor, generally of the internal combustion type.

Other examples of refrigerated cells that can be loaded on vehicles can be found in US2004/0226309 and WO88/10222.

US 2004/0226309 discloses a refrigerated transport system according to the preamble of claim 1.

In all cases, this involves systems which are originally configured, during first fitting, for this sole purpose and are therefore highly integrated. However, those systems do not cover as it were minor transport requirements, in which the frequency or volumes of goods transported at a controlled temperature does not justify the adoption of a means which is specifically and solely intended for that purpose.

A typical case is, for example, that of mixed logistics in which, for example, there is provision for a vehicle to travel an outward journey transporting perishable goods which require chilled conservation and a return journey with so-called "dried" goods which do not have any specific requirements involving conservation or actually could be damaged by being conserved in an insulated cell.

For that reason, until now the logistics of chilling have not been (or have been only very slightly) compatible with the non-specific conventional logistics, in such a manner that it has not been possible to sometimes optimize the use of transport vehicles for everything, to the detriment the economy of the service.

A main object of the present invention is to provide a transport system and relevant logistics which allow all the disadvantages set out with reference to the prior art cited to be overcome. This object is achieved by the invention by means of a transport system constructed in accordance with the appended claims.

The features and advantages of the invention will be better understood from the following detailed description of a preferred though non-limiting embodiment thereof which is illustrated by way of non-limiting example with reference to the appended drawings, in which:

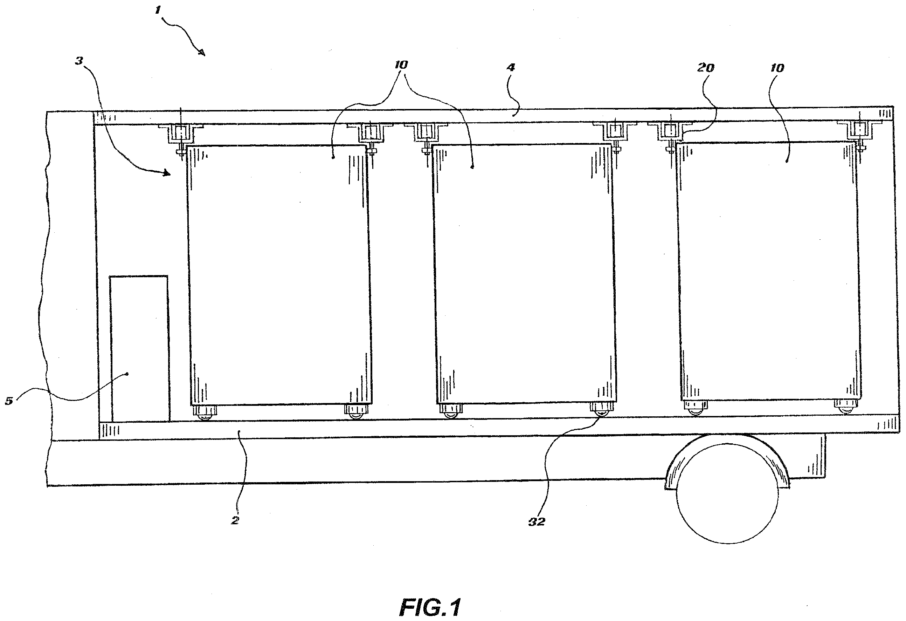

- Figure 1 is a side view of a loading space of a vehicle provided with a transport system according to the invention;

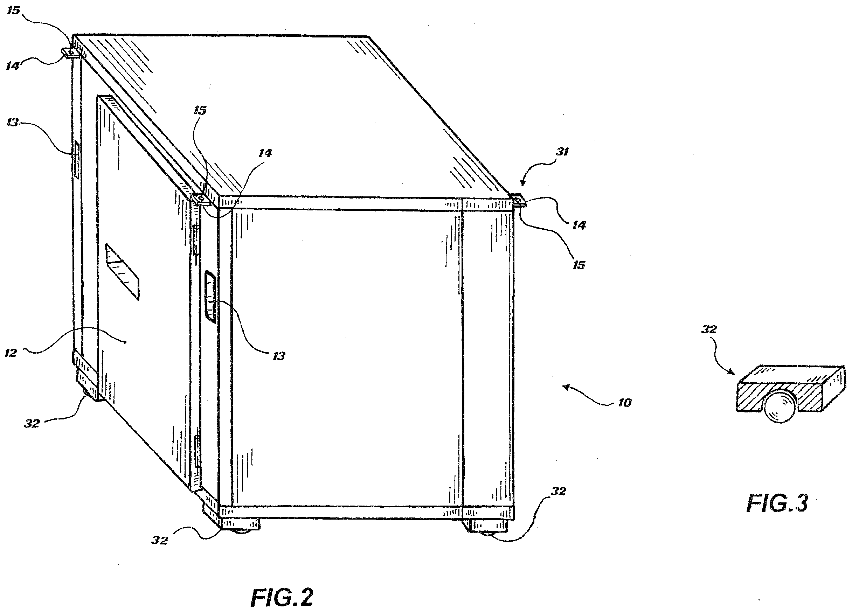

- Figure 2 is a perspective view of an insulated cell of the system of Figure 1;
- Figure 3 is a cross-section of a detail of the cell of Figure 2;

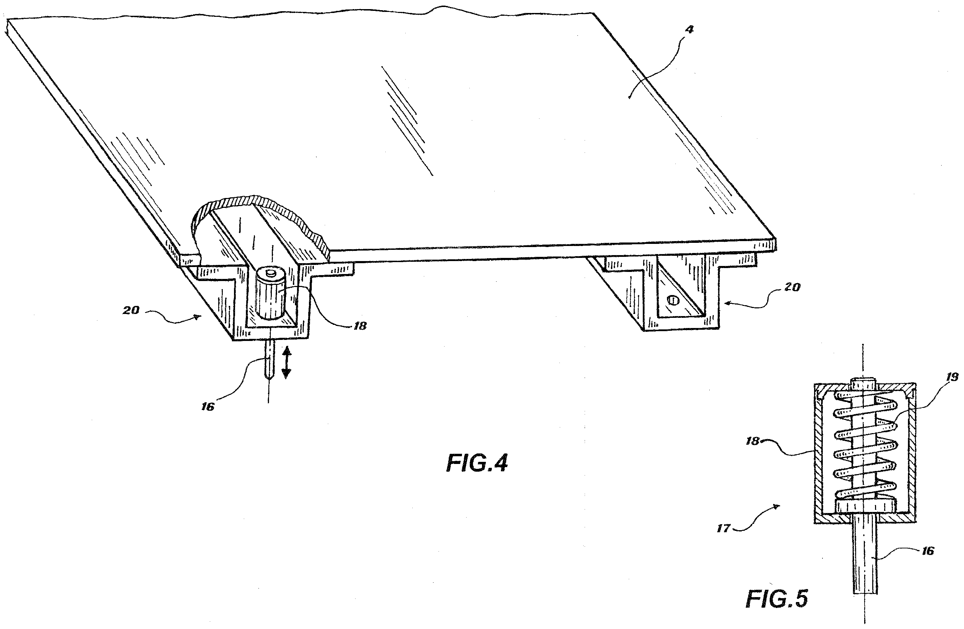

- Figure 4 is a view of another detail of the transport system according to the invention;
- Figure 5 is a view of a detail of Figure 4;

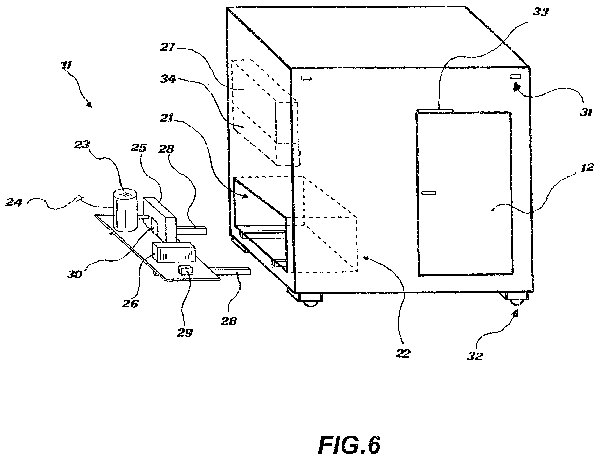

- Figure 6 is an exploded perspective view of a transport system according to the invention.

In the Figures, there is generally designated 1 a vehicle whose carrying structure comprises a load-carrying platform 2 which defines a loading space 3 which is closed at the upper portion by a ceiling 4. The vehicle 1 is preferably self-propelled with a motor including a current generator for generating direct current which controls the energy needs, in a manner known per se, of the vehicle and keeps a bank of batteries 5 charged.

According to the present invention, a refrigerated transport system includes at least one insulated cell 10 and a refrigerating module 11, associated with each cell 10, for the refrigeration thereof. The cell 10 has a substantially parallelepipedal formation with side walls, floor and ceiling which are structurally independent of each other and constructed from insulating panels having a configuration which is known per se, for example, panels having two juxtaposed sheets or skins which are relatively rigid, for example, sheets of plastics material reinforced by fibre glass, which are kept parallel and spaced apart by an insulating layer, for example, of polyurethane foam. As a result of the structural independence of the panels, which are joined to each other by means of screw type connections, hooks or the like, the panels can be individually replaced in the cell in the event of localized damage.

A door 12 which can be opened is formed in one of the side walls of the cell 10. Handles 13 which can be used to facilitate the movement of the cell, as will be better illustrated below, are further fitted to one or more sides of the cell 10.

Each cell has, in a state countersunk near the vertices of the outer surface of the floor, balls or wheels 32 which serve to facilitate the sliding of the cell on the support surface thereof. Near the vertices of the ceiling 4, however, there are fitted anchoring means 31 of the quick-fit type. In the example described, the anchoring means 31 each comprise a bracket 14 which is mounted near the vertices of the ceiling of the cell 10, outside it. In each bracket 14 there is formed a through-hole 15 which is capable of receiving a pin 16 which is axially guided in a cylinder 18 of a snap-fit retention device 17 counter to a spring 19. The system is such that, when the hole 15 is in alignment with the pin 16, the pin is urged to become snap-fitted in the hole 15, thereby locking the movement of the cell 10.

Advantageously, the rapid attachment securing means 31 are mounted on the ceiling of the cell 10 of the vehicle 1 which is provided for the transport thereof. The provision for transport comprises two omega-like longitudinal members 20 which are fixed to the ceiling 4 of the loading space 3 of the vehicle 1. A plurality of snap-fit retention devices 17 are mounted in a predetermined and adjustable position on the longitudinal members 20 so that the cell(s) which is/are supported on the load-carrying platform 2 of the loading space 3 can be blocked from above. That arrangement allows easier and better provision of a fleet of different vehicles for transporting the cells 10.

Each cell 10 is a unit which can be individually handled and which is provided to be mounted on vehicles and is structurally independent of and detachably secured to the vehicle itself with the above-described modalities. A refrigerating module 11 is preferably integrated, in the accessory cell 10, in a space or recess 21 which is provided, for example, in the region of the floor of the cell which consequently forms a step 22 at the internal side thereof.

The refrigerating module 11 comprises an electrically driven compressor 23 which can preferably be supplied at the same voltage as the electric equipment of the vehicle 1 by means of a plug type connector 24. In addition to the compressor 23 there are provided a condenser 29 and a control panel 25 which are associated with the compressor 23 itself and, optionally, a receptacle 26 for collecting condensation water and defrosting water. The receptacle 26 is preferably arranged outside the cell 10 in order to make it easier to access and empty it. The control panel 25 comprises a power supply 30 which allows the refrigerating module 11 to be supplied with electrical power when the cell 10 is disconnected from the vehicle.

The refrigerating module 11 is connected to a cooler 27 which is positioned inside the cell 10, for the refrigeration thereof by means of rapid attachments (not illustrated). In that manner, the refrigerating module 11 can readily be replaced for maintenance and in the event of breakdowns.

There is further provision for the entire refrigerating module 11 to be installed on guides 28 which make it readily removable from the space 21 for any replacement in the event of a breakdown.

With a plurality of cells 10 constructed in that manner, it is possible to configure a new refrigeration logistics system which uses, on the one hand, a fleet of vehicles 1 which require minimal preliminary provision which is substantially limited to a connector which allows the connection of one or more cells 10 to the electrical equipment of the vehicle and the assembly of the longitudinal members 20 necessary for fixing the cells 10 and, on the other hand, a plurality of cells 10 of the above-described type.

It is preferable for the vehicles used to be mainly self-propelled, such as lorries and vans, but it is possible also to make use of towed vehicles such as wagons and trailers.

The system thereby allows one or more cells 10 to be mounted on each vehicle 1, with the advantage of being able to transport commodities which have to be conserved at different temperatures, if a plurality of cells are used, on the same journey, or with the possibility of also loading on the vehicle, in addition to goods which need to be conserved at a controlled temperature, goods with various requirements which can be freely stowed on the load-carrying platform in the portion not occupied by the cells 10.

In that manner, a number of advantages result, such as a greater flexibility in terms of logistics and obvious economy of transport.

When the refrigerating cell 10 is removed from the vehicle 1, it could be temporarily supplied by the batteries of a lift truck which is used for the movement thereof until it is finally stowed in a store, or could be supplied at the network voltage by means of the power supply 30.

Furthermore, the cell 10 could be supplied by means of different energy sources, for example, by means of photovoltaic panels, wind generators, hydraulic generators or the like.

There is provision for the cell 10 to be provided with an electronic control unit and a diagnosis system. A proximity sensor 33 (of the reed type, or the like) which is associated with the door 12 for access to the cell 10 allows a distinction to be made between variations of temperature inside the cell 10 as a result of the door 12 being opened and variations owing to possible breakdowns in order to indicate, in both cases, the phenomenon recurring.

Finally, there is provision for each cell 10 to be provided with thermal accumulation masses 34, for example, of the eutectic type, in order to maintain a suitable temperature inside the cell 10 even in the event of a temporary interruption in the operation of the compressor 23.

## Claims

1. A refrigerated transport system including at least one insulated cell (10) and a refrigerating module (11) which is associated with the at least one cell (10) for the refrigeration thereof, the at least one cell (10) being a unit which can be individually handled and which is provided to be mounted on a vehicle (1), with respect to which the cell (10) is structurally independent and removably secured, the refrigerating module (11) being integrated in the cell (10) and provided to be removably connected to the vehicle (1) within limits with respect to the electrical equipment of the vehicle itself, **characterized in that** the cell (10) is provided with quick-fit anchoring means (31) for connection to the carrying structure of the vehicle (1).

2. A refrigerated transport system according to claim 1, wherein the quick-fit anchoring means (31) comprise a plurality of perforated brackets (14) and a corresponding plurality of resilient pins (16) which can engage in a snap-fitting manner in the corresponding hole (15) of a bracket (14), the brackets (14) and the pins (16) being mounted on one and the other of the cells (10) and the carrying structure of the vehicle (1), respectively.

3. A refrigerated transport system according to claim 1 or 2, wherein the quick-fit anchoring means (31) are mounted at an upper portion of the cell (10) and are provided for removably securing the cell (10) to longitudinal members (20) which are mounted in a spaced-apart relationship with respect to a load-carrying platform (2) of the vehicle (1) on which the cell (10) is supported when it is installed on the vehicle itself.

4. A refrigerated transport system according to claim 3, wherein the longitudinal members (20) are mounted in the manner of a ceiling (4) in a loading space (3) of the vehicle (1).

5. A refrigerated transport system according to anyone or more of the preceding claims, wherein the refrigerating module (11) comprises a compressor (23) which is supplied with direct current.

6. A refrigerated transport system according to claim 5, wherein the compressor (23) is provided with an electrical connector (24) for rapidly being attached to the electrical equipment of the transport vehicle (1) or to another source of energy.

7. A refrigerated transport system according to anyone or more of the preceding claims, wherein the cell (1) has externally a space for a refrigerating module (11) and has internally a cooler (27) which is connected to the refrigerating module (11).

8. A refrigerated transport system according to claim 7, wherein at least the compressor (23) of the refrigerating module (11) or the refrigerating module (11) itself is provided with rapid attachments for removal and/or replacement from/in that cell (10).

9. A refrigerated transport system according to anyone or more of the preceding claims, wherein the cell (10) is provided with handles (13) and/or sliding balls (32) for the movement thereof.

10. A refrigeration logistics system comprising a fleet of vehicles (1) and a plurality of cells (10) according to one or more of the preceding claims, wherein the cells (10) and vehicles (1) are provided for the removable assembly of at least one cell (10) for each vehicle.

11. A refrigeration logistics system according to claim 10, wherein the vehicle (1) is of the self-propelled type.

12. A refrigeration logistics system according to claim 10, wherein the vehicle (1) is of the towed type.

13. A refrigeration logistics system according to claim 12, wherein the vehicle (1) is a trailer for self-propelled vehicles.

## Patentansprüche

1. Kühltransportsystem mit zumindest einer isolierten Zelle (10) und einem Kühlmodul (11), das mit der zumindest einen Zelle (10) zur dazugehörigen Kühlung verbunden ist, wobei die zumindest eine Zelle (10) eine Einheit ist, die einzeln behandelt werden kann, und die zum Befestigen an einem Fahrzeug (1), bezüglich dem die Zelle (10) strukturell unabhängig und entfernbar befestigt ist, vorgesehen ist, wobei das Kühlmodul (11) in der Zelle (10) angeordnet und vorgesehen ist, um mit dem Fahrzeug (1) in Grenzen bezüglich der elektrischen Ausrüstung des Fahrzeugs selbst entfernbar verbunden zu sein, **dadurch gekennzeichnet, dass** die Zelle (10) mit Schnellanschluss-Verankerungseinrichtungen (31) zur Verbindung mit der tragenden Konstruktion des Fahrzeugs (1) versehen ist.

2. Kühltransportsystem gemäß Anspruch 1, wobei die Schnellanschluss-Verankerungseinrichtungen (31) eine Mehrzahl von gelochten Halterungen (14) und eine entsprechende Mehrzahl von elastischen Stiften (16) aufweist, die in einer Schnappverschlussweise in der entsprechenden Öffnung (15) einer Halterung (14) in Eingriff sind, wobei die Halterungen (14) und die Stifte (16) jeweils auf einer oder der anderen der Zellen (10) und der Tragkonstruktion des Fahrzeugs (1) befestigt sind.

3. Kühltransportsystem gemäß Anspruch 1 oder 2, wobei die Schnellanschluss-Verankerungseinrichtungen (31) an einem oberen Bereich der Zelle (10) befestigt und zum entfernbaren Sichern der Zelle (10) an Längselementen (20) vorgesehen sind, die in einem beabstandeten Verhältnis bezüglich einer Last-aufnehmenden Ladefläche (2) des Fahrzeugs (1) befestigt sind, auf der die Zelle (10) abgestützt ist, wenn sie auf dem Fahrzeug selbst eingebaut wird.

4. Kühltransportsystem gemäß Anspruch 3, wobei die Längselemente (20) in der Art einer Obergrenze (4) in einem Laderaum (3) des Fahrzeugs (1) befestigt sind.

5. Kühltransportsystem gemäß einem oder mehreren der vorhergehenden Ansprüche, wobei das Kühlmodul (11) einen Kompressor (23) aufweist, der mit Gleichstrom versorgt wird.

6. Kühltransportsystem gemäß Anspruch 5, wobei der Kompressor (23) mit einem elektrischen Anschluss (24) zum schnellen Anordnen an die elektrische Ausrüstung des Transportfahrzeugs (1) oder an eine andere Energiequelle versehen ist.

7. Kühltransportsystem gemäß einem oder mehreren der vorhergehenden Ansprüche, wobei die Zelle (1) außen einen Raum für ein Kühlmodul (11) und innen einen Kühler (27), der mit dem Kühlmodul (11) verbunden ist, aufweist.

8. Kühltransportsystem gemäß Anspruch 7, wobei zumindest der Kompressor (23) des Kühlmoduls (11) oder das Kühlmodul (11) selbst mit Schnellbefestigern zum Entfernen und/oder einem Ersatz von/in dieser Zelle (10) versehen ist.

9. Kühltransportsystem gemäß einem oder mehreren der vorhergehenden Ansprüche, wobei die Zelle (10) mit Griffen (13) und/oder Gleitkugeln (32) zur dazugehörigen Bewegung versehen ist.

10. Kühllogistiksystem mit einer Fahrzeugflotte (1) und einer Mehrzahl von Zellen (10) gemäß einem oder mehreren der vorhergehenden Ansprüche, wobei die Zellen (10) und Fahrzeuge (1) zur entfernbaren Anordnung zumindest einer Zelle (10) für jedes Fahrzeug vorgesehen sind.

11. Kühllogistiksystem gemäß Anspruch 10, wobei das Fahrzeug (1) ein selbstfahrender Typ ist.

12. Kühllogistiksystem gemäß Anspruch 10, wobei das Fahrzeug (1) ein gezogener Typ ist.

13. Kühllogistiksystem gemäß Anspruch 12, wobei das Fahrzeug (1) ein Anhänger für selbstfahrende Fahrzeuge ist.

## Revendications

1. Système de transport réfrigéré comprenant au moins une cellule isolée (10) et un module de réfrigération (11) qui est associé à l'au moins une cellule (10) pour la réfrigération de celle-ci, ladite au moins une cellule (10) étant une unité qui peut être manipulée individuellement et qui est fournie pour être montée sur un véhicule (1), par rapport auquel la cellule (10) est structurellement indépendante et fixée de manière amovible, le module de réfrigération (11) étant intégré dans la cellule (10), et fourni pour être raccordé de manière amovible au véhicule (1) à l'intérieur de limites en ce qui concerne l'équipement électrique du véhicule lui-même, **caractérisé en ce que**
la cellule (10) est pourvue d'un moyen d'ancrage rapide (31) pour le raccordement à la structure porteuse du véhicule (1).

2. Système de transport réfrigéré selon la revendication 1, dans lequel le moyen d'ancrage rapide (31) comprend une pluralité de pattes perforées (14) et une pluralité correspondante de goupilles élastiques (16) qui peuvent s'engager par encliquetage dans un trou correspondant (15) d'une patte (14), les pattes (14) et les goupilles (16) étant respectivement montées sur l'une et l'autre des cellules (10) et de la structure porteuse du véhicule (1).

3. Système de transport réfrigéré selon la revendication 1 ou 2, dans lequel le moyen d'ancrage rapide (31) est monté sur une partie supérieure de la cellule (10) et est adapté pour fixer de manière amovible la cellule (10) à des éléments longitudinaux (20) qui sont montés de manière espacée par rapport à une plate-forme portant une charge (2) du véhicule (1) sur laquelle la cellule (10) est supportée lorsqu'elle est installée sur le véhicule lui-même.

4. Système de transport réfrigéré selon la revendication 3, dans lequel les éléments longitudinaux (20) sont montés à la manière d'un plafond (4) dans un espace de chargement (3) du véhicule (1).

5. Système de transport réfrigéré selon l'une quelconque ou plusieurs des revendications précédentes, dans lequel le module de réfrigération (11) comprend un compresseur (23) qui est alimenté en courant continu.

6. Système de transport réfrigéré selon la revendication 5, dans lequel le compresseur (23) est pourvu d'un connecteur électrique (24) pour être attaché rapidement à l'équipement électrique du véhicule de transport (1) ou à une autre source d'énergie.

7. Système de transport réfrigéré selon l'une quelconque ou plusieurs des revendications précédentes, dans lequel la cellule (1) a extérieurement un espace pour un module de réfrigération (11) et a intérieurement un dispositif de refroidissement (27) qui est raccordé au module de réfrigération (11).

8. Système de transport réfrigéré selon la revendication 7, dans lequel au moins le compresseur (23) du module de réfrigération (11) ou le module de réfrigération (11) lui-même est pourvu d'attaches rapides pour le retrait et/ou le remplacement à partir de/dans cette cellule (10).

9. Système de transport réfrigéré selon l'une quelconque ou plusieurs des revendications précédentes, dans lequel la cellule (10) est pourvue de poignées (13) et/ou de billes de glissement (32) pour le déplacement de celle-ci.

10. Système logistique de réfrigération comprenant une flotte de véhicules (1) et une pluralité de cellules (10) selon une ou plusieurs des revendications précédentes, dans lequel les cellules (10) et véhicules (1) sont fournis pour l'assemblage amovible d'au moins une cellule (10) pour chaque véhicule.

11. Système logistique de réfrigération selon la revendication 10, dans lequel le véhicule (1) est du type automoteur.

12. Système logistique de réfrigération selon la revendication 10, dans lequel le véhicule (1) est du type tracté.

13. Système logistique de réfrigération selon la revendication 12, dans lequel le véhicule (1) est une remorque pour véhicules automoteurs.
